# EUROPEAN PATENT APPLICATION

(11) **EP 0 931 460 A2**
(43) Date of publication of application: **28.07.1999**
(21) Application number: 99300304.5
(22) Date of filing: 18.01.1999
(51) Int. Cl.: A23C 9/13

(54) **Layered, flavored yogurt product**

(30) Priority: 21.01.1998 US 10521
(71) Applicant: KRAFT FOODS, INC., Northfield, Illinois 60093 (US)
(72) Inventor: Chordash, Richard Andrew, Ithaca, New York 14850 (US); Lee, Thomas Daw-Yuan, Scarsdale, New York 10583 (US); Dell, William Joseph, Wappinger Falls, New York 12590 (US)
(74) Representative: Eyles, Christopher Thomas

(57) **Abstract**

A chocolate or other non-acid, non-fruit flavored yogurt product is prepared to provide a unique combination of textures by providing a fluid flavoring portion (24) and a hardened confection portion (26). The confection (26) can be a fat continuous formulation having a melting point above refrigerator temperature, but below room temperature. The confection separates the fluid flavoring (e.g., chocolate syrup) (24) from the yogurt (28), which preferably contains active cultures. This new product form enables production and storage in the normal manner for yogurt.

## Description

### Technical Field

The invention relates to flavored (*e.g*., chocolate) yogurt, and particularly to one that, due to its unique formulation and preparation, requires only a single-compartment package and normal channels of distribution.

Yogurt has been prepared for centuries in essentially the same way. Simply, pasteurized milk is inoculated (preferably after pasteurizing) with a preferred culture and held at a suitable temperature for long enough (*e.g*., 3 to 6 hours) for the active cultures to grow in the milk. A natural consequence of the culturing process is the production of lactic acid, which causes coagulation and enhances preservation. If the yogurt is made with good manufacturing practices and cultured until the pH is less than about 4.6, the product should be stable for several weeks under refrigeration.

However, the acid flavor is incompatible with non-fruit, non-acid flavors such as chocolate. Attempts to simply add a non-acid bulky flavor, such as chocolate syrup or sweetened cocoa, result in products having a taste unlike what would be expected of either yogurt or chocolate. Also, when these bulky flavors are added in amounts or contain additives, such as buffering salts, intended to decrease the acid taste, preservation can be compromised. These same problems accompany the incorporation of other flavors such as butterscotch, caramel, coffee, mocha, peanut butter, peppermint, vanilla, and the like.

While a number of efforts have been made to address these interrelated problems, the art is in need of alternative solutions.

### Background Art

Yogurt and non-acid flavors such as chocolate are favorites in many regions of the world. Unfortunately, the available products combining these flavors, are packaged in two compartment packages, or have been heat treated to assure preservation (thus, contain no active cultures). These techniques are necessitated due to the increased pH caused by large amounts of non-acid bulky flavors.

Yogurt products with fruit are widely available and have an acid taste which is fully compatible with yogurt. The fruit can be mixed in with the yogurt to provide a Swiss-style yogurt or placed in the container before adding the culturable milk mix. In a variation of fruit and yogurt products, Strussi discloses, in U. S. Patent No. 4,225,623, that the fruit layer can be placed on top of the yogurt. According to one of his methods, a layer of hardenable fat is sprayed into the container between the yogurt and the fruit to inhibit intermingling between the fruit and yogurt portions The result of any of these processes will be pleasing to the taste and quite stable due to the acid character of both components. Stability of a combined fruit and yogurt product is assured because the pH is maintained at a sufficiently low level.

Unfortunately, with non-acid, sweet flavors such as chocolate, the comingling or simply close association of yogurt and the flavors can increase the pH to unacceptable levels.

Among commercial chocolate yogurt products is one having high starch and sugar contents, but which has been heat treated to extend its shelf life. Many yogurt lovers insist on yogurt products with live and active cultures, and products of this type do not meet their expectations.

Another type of yogurt containing sweet, non-acid flavors includes pieces of candy, cookies or puffed cereal along with chocolate or other flavor, packaged in a two-compartment container, of the general type as that shown in U. S. Patent No. 2,739,751 to Bailey, U. S. Patent No. D307,865, to Conner, *et al*., or EP 0 556 638 A1 to GEA Finnah, Gmbh. The two compartments are individually sealed to keep the sweet flavor separate from the yogurt during distribution and storage. Typically, the flavor will be in a top compartment and the yogurt will be in a bottom one. Both are opened and the contents of the top are poured into the bottom.

Other yogurt products have been produced with a chocolate or other non-acid flavor, simply mixed without adequately addressing the contrast between the tartness of the yogurt and the expectation of a sweet chocolate flavor. These products have been disappointments to many people.

There remains a need for a yogurt product having a non-fruit, non-acid flavor, such as chocolate, containing active cultures in a new product form that enables preparation by normal means and distribution through normal channels.

### Disclosure of the Invention

It is an object of the invention to provide a process for preparing a non-acid, non-fruit (*e.g*., chocolate) yogurt containing active cultures.

It is another object of the invention to provide a yogurt product and process having a delicious flavor combination and a pleasing textural contrast.

It is another and more specific object of the invention to provide a process for preparing a new, multi-textured, non-acid flavored (*e.g.*, chocolate) yogurt that enables the enjoyment of the product utilizing a single compartment package and only normal channels of distribution.

These and other objects are achieved by the present invention, which provides a non-acid flavored (*e.g*., chocolate) yogurt product and process for preparing it.

In one aspect, the yogurt product comprises: a yogurt portion containing active cultures and having a pH of less than about 4.6; a fluid flavoring portion; and a layer of a water impermeable confection separating the yogurt portion from the fluid flavoring portion. The fluid flavoring can be either at the top or at the bottom of the container in which the product is packaged.

A preferred form of the process of the invention calls for: providing a refrigerator-stable, fluid flavoring portion having a pH above 4.6; providing a yogurt portion containing active cultures and having a pH of less than about 4.6; and packaging the two portions in a single-compartment container, separated by a layer of hardened confection.

Many of the preferred aspects of the invention are described below.

### Brief Description of the Drawings

The invention will be better understood and its advantages will become more apparent in view of the following detailed description, especially when read with reference to the appended drawings wherein:
Figure 1 is a perspective view, partially cut away, showing a packaged yogurt product according to the invention; and
Figure 2 is a perspective view, similar to Figure 1, showing an preferred form of packaged product.

### Industrial Applicability

The following description will illustrate the preparation of preferred products of the invention to provide the person skilled in the art with the information necessary to make these products as well as variations of them using equivalent materials and methods.

The term "yogurt" is used herein to mean all of those products meeting the definition as set forth in 21 C.F.R. §§131.200, 131.203, and 131.206. The preferred products of the invention contain live and active cultures. Generally, these products are made by fermenting milk or a milk mix with a symbiotic blend of *Streptococcus salvarius*, (*e.g.*, subsp. *thermophilus*) and *Lactobacillus delbrueckii,* (*e.g.*, subsp. *bulgaricus*). See Hui, *Dairy Science & Technology Handbook,* Vol. 2., Product Manufacturing, 1993, pp. 1-55, and the references cited therein for a more detailed description, which is hereby incorporated by reference. The result is a semisolid fermented product having clean taste and quick melting action in the mouth. The culture may be augmented to also contain additional microbes, including *Lactobacillus acidophilus, Bifidobacterium bifidus,* etc.

The invention calls for yogurt to be prepared in conventional fashion. It can be plain or contain flavors, including bulky flavors, as known to the art. A fluid non-acid, non-fruit (e.g., chocolate) portion, is made separately and packaged with the yogurt portion, separated by a water-impermeable confection layer. The fluid portion and the yogurt base portion are kept separated by the confection layer until just before consumption when the two are mixed by the consumer by breaking up the confection layer with a spoon. The confection pieces or chips provide a pleasing textural contrast with the fluid flavoring and yogurt.

### Preparation Of The Fluid Flavoring

The non-acid, non-fruit fluid flavoring portion can be a commercially-available syrup suitable for use as ice cream toppings. Chocolate syrups are typical, and can be purchased under various brand names including Hershey's® brand syrup and Nestle® Quick® brand syrup. Typical syrups suitable for use in the invention will be those with near-neutral to high pH values, sugar and water contents reasonable to achieve good flow properties and require no added fat, but can have fat contents of up to about 10%.

To the extent that the fluid flavoring contains fat, the fat is preferably a liquid fat containing a low percentage of saturated fatty acids and is preferably winterized to maintain flowability down to 0°C or below. Sunflower and safflower oils are exemplary of liquid fats. If present, the liquid fat is preferably maintained as a dispersed phase within a continuous aqueous phase.

It is important that the fluid flavoring portion have a continuous aqueous phase to facilitate its easy mixing with the yogurt. This very property, however, without the invention, would be a cause of concern. Without the invention, copacking the fluid flavoring and the yogurt could create a risk of microbial growth at the interface. Without the invention, the water phases of the two portions would freely migrate and result in a higher than desired pH in the yogurt. Typical pH values for the fluid flavoring portion of the product of the invention will be above 4.6 and usually fall within the range of from about 5.5 to about 7.5. Higher pH values are permissible, as are the presence of buffering salts, to the extent that they do not adversely impact the flavor.

The fluid flavoring portion should be flowable down to at least about 10°C, and preferably down to about 0°C. Typically the viscosity is from about 5 to about 12cm at 20°C, as measured by Boswick methodology, which is well-known in the yogurt art. Again, without the invention, this property of flowability would adversely impact the quality of the product.

The preferred fluid flavorings will include a non-acid, non-fruit flavor such as chocolate or other flavor such as butterscotch, caramel, coffee, maple, mocha, peanut butter, peppermint, vanilla, and the like. The fluid flavoring portion will preferably include a sweetener, which can be a natural sugar, a material containing natural sugar, or a synthetic or other intense sweetener.

The term "sugar" is to be understood as meaning any of a number of useful saccharide materials. Included in the list of useful sugars are the mono-saccharides, di-saccharides and polysaccharides and their degradation products; e.g., pentoses, including aldopentoses, methylpentoses, keptopentoses, like xylose and arabinose; a deoxyaldose like rhamnose, hexoses and reducing saccharides such as aldo hexoses like glucose, galactose and mannose; the ketohexoses, like fructose and sorbose; disaccharides, like lactose and maltose; non-reducing disaccharides such as sucrose and other polysaccharides such as dextrin and raffinose; and hydrolyzed starches which contain as their constituents oligosaccharides. A number of sugar syrups, including corn syrup, high fructose corn syrup, molasses and the like, are common sources as are various granular and powdered forms.

The weight of sugar will typically comprise at least 35%, and preferably from 50 to 70%, of the fluid flavoring.

A typical chocolate syrup formulation would be as follows:

| Ingredient | Weight % |
|---|---|
| Sugar syrups | 35-55 |
| Sucrose | 22-32 |
| Sweetened condensed skim milk | 5-15 |
| Water | 5-15 |
| Alkalized cocoa powder/chocolate liquor | 4-7 |
| Partially hydrogenated vegetable oil | 3-6 |
| Modified food starch/gums | 0.2-3 |

High-intensity sweeteners will be used in like proportion, based on their relative sweetness equivalencies, and the above ratios will be adjusted accordingly.

Among the intense sweeteners are aspartame, acesulfame-K, saccharin, cyclamate, neohesperidin dihydrochalcone, thaumatin, sucralose, altame, stevioside, glycyrrhzin, Lo Han Guo, and the like. Also, low-intensity, low-calorie sweeteners such as sorbitol and erythritol can be employed. When a high-intensity sweetener is employed, it will be preferred to utilize sufficient viscosity-building material to obtain the desired thick, flowable mixture.

The fluid (*e.g*., chocolate) flavoring portion can additionally contain common ingredients for syrups such as whey, preservatives, buffers, emulsifiers, dispersants, colorants, flavor enhancing materials, salts, and the like as necessary to achieve the overall flavor and texture desired.

### Preparation Of The Yogurt Portion

The yogurt portion is prepared in any manner consistent with the preparation of a high quality yogurt, preferably with live and active cultures.

Essentially, the process will entail heating milk, or a milk mix containing other permitted ingredients, under conditions effective to inactivate any organisms present in the milk or milk mix. The milk or milk mix is then inoculated with a suitable culture (typically, a symbiotic blend of *Streptococcus salvarius* e.g., subsp. *Themophilus* and *Lactobacillus delbrueckii*, e.g., subsp. *bulgaricus*) and held for a time sufficient to develop the characteristic yogurt texture and taste. Holding at near 20 to 55°C for from 3 to 6 hours is effective. The final pH will typically be within the range of from about 4.2 to about 4.6. Following this step of culturing, the yogurt is cooled to stop the culturing but not inactivate or kill the culture.

The source of the milk can be any of those sources as by tradition, regulation or standards have come into favor. Principal among these are milk from cows, sheep, goats, buffalo, and the like. The milk can be fresh or in other forms permitted by regulation, including milk mixes with non-fat dry milk or the like. Various other materials can also be added to the milk mix prior to fermentation so long as they do not adversely affect the final quality of the yogurt or change its identity. For simplicity in description, the term "milk" as used herein is also intended to include culturable milk mixes as permitted by regulation.

Fat content of the milk can be infinitely varied depending on various commercial or regulatory requirements.

The yogurt portion can be sweetened or mixed with bulky or other flavors as appropriate and understood by the art. For example, sugar or other sweeteners can be added prior to or after fermentation, so long as it is not used in such large amounts to unduly inhibit the fermentation. When a bulky flavoring or sweetener is added to the yogurt after fermentation, the natural consistency of the yogurt is modified and it becomes necessary to add stabilzers of a type and in an amount sufficient to restore a natural yogurt-like texture. Stabilizers can also be added prior to naturally setting the yogurt for the purpose of enhancing smoothness and decreasing syneresis during long periods of storage. Typical of the stabilizers are proteinaceous materials such as gelatin, and whey protein concentrate, natural and synthetic hydrophilic colloids, such as carboxymethyl cellulose, vegetable /fruit gums such as locust bean gum, carob bean gum, guar gum, pectin, carrageenans xanthan gum, and alginates and various starches and modified starches. The stabilizers are normally added prior to fermentation to assure thorough mixing while least affecting natural texture.

### Preparation Of The Water-Impermeable Confection Layer

The water-impermeable confection layer provides a structurally-sound moisture barrier. The layer is preferably comprised of a fat-continuous composition having suitable fat content, sugar content and flavor to provide structural integrity during shipping and handling. The preferred confection materials are pourable at room temperature (*e.g*., about 20°C), but are solid at temperatures at or below 4°C. The confection can have the same flavor as the fluid flavoring or can be different.

The composition of the confection layer material is distinctly different from that of the fluid flavoring portion due to the necessary presence of a high fat content. The fat content must be sufficient to enable the formation of a stable water-in-oil emulsion so that water cannot migrate through this layer. Emulsifiers such as lecithin, mono and diglycerides, and propylene glycol alginate may be employed in customary amounts. The fat content is also important from the standpoint of structural strength of the coating. It should, together with a sugar-sweetened aqueous phase, provide a layer which is resistant to breaking during shipping and handling. To achieve a suitable strength, the layer should be at least 0.25cm (0.1 inches) thick, preferably from about 0.3 to about 0.6cm.

Another feature of the confection material is its ability to melt quickly in the mouth, giving a rapid oiling and flavor release, as opposed to natural chocolate containing cocoa butter that melts only after reaching body temperature. Cold natural chocolate is slow to melt and can give a waxy mouthfeel. Vegetable oils such as coconut oil, soybean oil, corn oil, palm kernel oil, and the like, have another advantage over cocoa butter in that they do not shrink away from the sides of the container upon cooling. Therefore, once the side of the container is wetted with the confection in its pourable state, it will adhere well to the container and assure a good seal.

Preferably, the fat will be present in an amount of from 40 to 70%. The sugar content of the aqueous phase will normally be within the range of from 35 to 65% of the aqueous phase. U. S. Patent No. 4,414,239 to Oven discloses suitable representative formulations and is incorporated herein by reference. Several suitable confection materials are commercially-available. For example, Smuckers® brand magic Shell® topping and Hunt-Wesson® brand chocolate coating are effective.

A typical confection layer composition would be as follows:

| Ingredient | Weight % |
|---|---|
| Partially hydrogenated vegetable oil | 55-70 |
| Sucrose | 10-35 |
| Cocoa | 3-15 |
| Milk powder | 0-20 |
| Lecithin | 0-3 |
| Flavor | (as desired) |

### Packaging

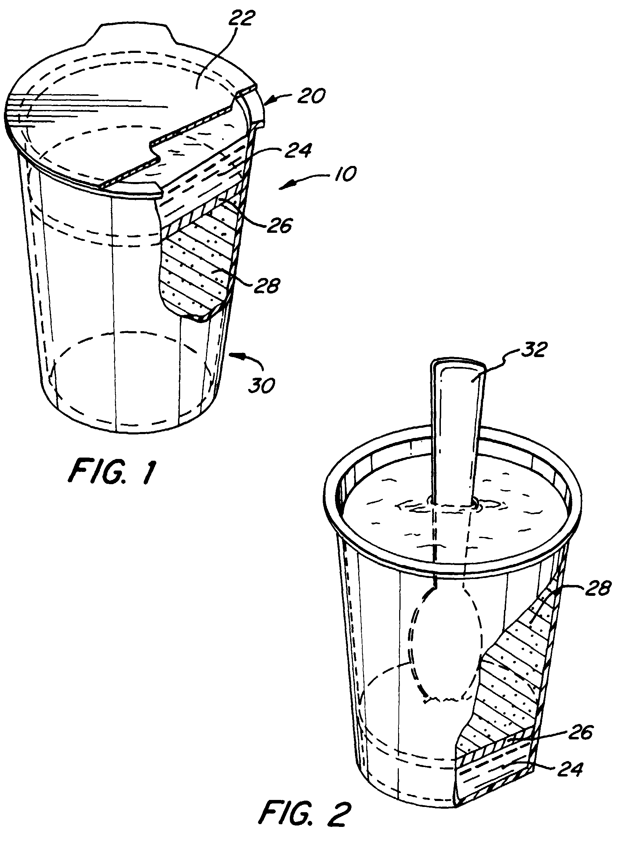

The fluid flavoring and yogurt portions are packaged in a single chamber of conventional yogurt container, separated by the confection layer. Figure 1 shows a package 10 in perspective view, partially cut away to better show the manner in which the unique product is arranged. The container 10 has a top lid portion 20 and bottom cup portion 30. Top lid portion 20 may be a foil cover 22. The foil can be of plastic, metal or composite construction as is known in the art. It can be sealed by heat sealing or adhesive. The container is shown partially broken away to reveal a top layer of fluid flavoring 24, an intermediate layer of hardened confection 26 and a bottom layer of yogurt 28. In this embodiment, the yogurt is poured into the container at a temperature of about 4°C, the confection layer material is then poured on top of the yogurt and allowed to set before the fluid flavoring material is poured thereover. A typical weight ratio of the fluid flavoring portion to the yogurt is within the range of from about 1:3 to about 1:8, and more preferably from about 1:4 to about 1:5.

Figure 2 is a perspective view similar to Figure 1, but showing the compositions of the top and bottom layers reversed. To serve the yogurt, the container is opened and the contents mixed, as desired, *e.g.*, by stirring the contents of a fluid flavoring portion 24 into the a yogurt 28 in container 30. Figure 2 shows a spoon 32 inserted in the container for rupture of the confection layer prior to mixing and consumption. Again, it is noted that the fluid flavoring portion preferably has a continuous aqueous phase to facilitate mixing. An advantage of the invention is the pleasing textural contrast that the broken-up confection provides.

The following Example is provided to further illustrate and explain a preferred form of the invention and is not to be taken as limiting in any regard. Unless otherwise indicated, all parts and percentages are by weight.

### Example

In this example, a comparison is made between two yogurts prepared in accord with the invention (having a yogurt portion separated from a fluid flavoring portion by a confection layer) to a control where the yogurt and fluid flavoring portions are in direct contact. Test sample 1 had the yogurt on top, and test sample 2 had the yogurt on the bottom. The samples were tested for appearance, taste and pH. The results of the testing are summarized in the table below.

The yogurt base portion was commercially-available Bryers® Smooth & Creamy™ Classic Strawberry yogurt (Kraft Foods, Inc., Northfield, Illinois). For the fluid flavoring portion, commercial chocolate syrup (Hershey's® Double Chocolate Topping from Hershey Foods, Hershey, Pennsylvania) was employed. The confection layer was Hunt-Wesson® Chocolate Coating (from Hunt-Wesson, Inc., Fullerton, California).

The control samples were prepared by pouring a layer of about 29 grams of the chocolate syrup in the bottom of each of the 6-ounce glass jars used and covering it with about 142 grams of the yogurt, having a pH of 4.23 (measured 4 days before the test). The jars were then covered and refrigerated.

Test 1 samples were prepared by again pouring about 29 grams of chocolate syrup into the bottom of the jars. Over this, the confection layer was added at a temperature of about 20°C in an amount sufficient (about 8 grams) to fully cover the syrup and wet the side of the jars. Again, contents were covered with about 142 grams of the yogurt, having a pH of 4.23 (measured 4 days before the test). The jars were then covered and refrigerated in like manner as the control samples.

Test 2 samples were prepared by pouring about 142 grams of the yogurt into the bottom of the jars. Over this, the confection layer was added at a temperature of about 20°C in an amount sufficient (about 12 grams) to fully cover the yogurt and wet the side of the jars. The contents were covered with about 29 grams of chocolate syrup. The jars were then covered and refrigerated in like manner as the control samples.

| **Sample** | **Composition Observed** | **Observations** | | |
|---|---|---|---|---|
| | | **One Week** | **Four Weeks** | **Eight Weeks** |
| **Control (yoghurt over Syrup)** | Whole jar | Modest color migration, substantial syneresis | Color on bottom of yoghurt is chocolaty, Strong syneresis | Color on bottom of yoghurt is chocolaty, Strong syneresis |
| | Top 1/3 yogurt | pH 4.20 | pH 4.21 | pH 4.21 |
| | Middle 1/3 yogurt | pH 4.21 | pH 4.27 | pH 4.29 |
| | Bottom 1/3 yogurt | pH 4.38, light brown | pH 4.38, light brown | pH 4.35, light brown |
| | Syrup | pH 5.48 | pH 4.82 | pH 4.52 |
| **Test 1 (Yogurt /confection /Syrup)** | Whole jar | No migration, no syneresis | Intact, no syneresis | Intact, no syneresis |
| | Top 1/3 yogurt | pH 4.20 | pH 4.11 | pH 4.10 |
| | Middle 1/3 yogurt | pH 4.20 | pH 4.11 | pH 4.09 |
| | Bottom 1/3 yogurt | pH 4.20 | pH 4.11 | pH 4.09 |
| | Confection | Intact, hard, no disturbance, breaks into large pieces, tastes good, oily | Can be broken into thin but large chunks, separable from syrup, tastes good (strawberry chocolate) | Can be broken into thin but large chunks, separable from syrup, tastes good (strawberry chocolate) |
| | Syrup | pH 5.58 | pH 5.50, very slight syneresis | pH 5.60 |
| | | | | |
| **Test 2 (Syrup Confection Yogurt)** | Whole jar | Appears intact, air gaps between syrup and shell | intact, no syneresis | intact, no syneresis |
| | Syrup | pH 5.62, Somewhat thicker than the raw material | pH 5.49, Smooth, undisturbed surface | pH 5.69, Smooth, undisturbed surface |
| | Confection | Top is even, the flip side is irregular due to uneven yogurt surface | Hard, difficult to break because it sits on top of yogurt. The edge is too thick | Hard, difficult to break because it sits on top of yogurt. The edge is too thick |
| | Top 1/3 yogurt | pH 4.21 | pH 4.16 | pH 4.21 |
| | Middle 1/3 yogurt | pH 4.19 | pH 4.16 | pH 4.18 |
| | Bottom 1/3 yogurt | pH 4.18 | pH 4.15 | pH 4.16 |

In addition to the products listed above, test 2 samples were also prepared in 6 ounce plastic cups to facilitate studying for impact stability.
1) One-day old samples of these samples were individually compressed using a motorized screw driven plunger attached to a Chatillon™ force gauge to measure the applied compression force. Force was applied to the outside of the cup at the level of the hard shell layer. The cups were compressed against a stationary holder to a displacement of between ½ and ¾ inches (between 1.27 and 1.91 cm) or until movement of the lower layer was observed. At pressures up to 25 pounds per 0.2 square inches (861.85 kPa) and regardless of the speed of compression, the hard confection layer was displaced with only minor damage, and the little damage done was limited to the area immediately impacted by the plunger.
2) A number of three-week old plastic-packed samples were dropped from a height of six feet (182.88 cm) such that the bottom of the cups landed flush with the floor. The shell survived without breaking or dislodging.

The above description is intended to enable the person skilled in the art to practice the invention. It is not intended to detail all of the possible modifications and variations that will become apparent to the skilled worker upon reading the description. It is intended, however, that all such modifications and variations be included within the scope of the invention which is defined by the following claims. The claims are meant to cover the indicated elements and steps in any arrangement or sequence which is effective to meet the objectives intended for the invention, unless the context specifically indicates the contrary.

## Claims

1. Yogurt product containing cultures, comprising:
a yogurt portion (28) containing active cultures and having a pH of less than about 4.6;
a non-acid, non-fruit flavoring portion (24); and
a layer of a water impermeable confection (26) separating the yogurt portion (28) from the fluid flavoring portion (24).

2. A yogurt product according to claim 1, wherein the pH of the fluid flavoring portion (24) is above 4.6.

3. A yogurt product according to claim 1 or claim 2, wherein the fluid flavoring (24) is chocolate syrup and the confection is chocolate flavored.

4. A packaged chocolate yogurt product utilizing a single-compartment package, comprising:
a chocolate syrup portion (24);
a yogurt portion (28) containing active cultures and having a pH of less than about 4.6;
the syrup and yogurt portions (24,28) contained within a single-compartment container (10) and separated by a layer of a hardened confection (26).

5. A yogurt product according to claim 4, wherein the yogurt (28) is on top.

6. A yogurt product according to claim 4, wherein the yogurt (28) is on the bottom.

7. A yogurt product according to any one of claims 4 to 6, wherein the confection (26) is chocolate flavored.

8. A yogurt product according to any one of claims 4 to 7, wherein the chocolate syrup (24) has a pH of above 4.6 and the confection (26) comprises a chocolate-flavored confection with a fat content of at least 35%.

9. A yogurt product according to any one of claims 4 to 8, wherein the confection (26) has a continuous fat phase.

10. A yogurt product according to any one of claims 1 to 9, wherein the layer of water impermeable confection (26) is fluid at 20°C and is solid at 4°C.

11. A yogurt product according to any one of claims 1 to 10, wherein the confection (26) has a thickness of at least 0.25 cm.
